# EUROPEAN PATENT SPECIFICATION

(11) **EP 1 479 740 B1**
(45) Date of publication and mention of the grant of the patent: **19.07.2006**
(21) Application number: 04011349.0
(22) Date of filing: 13.05.2004
(51) Int. Cl.: C09D 11/00

(54) **Ink composition**
Tintenzusammensetzung
Composition d'encre

(30) Priority: 21.05.2003 IT MI20031025
(43) Date of publication of application: 24.11.2004
(73) Proprietor: MABER S.R.L., 20146 Milano (IT); Caselli, Junio, 55012 Capannori (Luca) (IT)
(72) Inventor: Del Moro, Federica, 56011 Montemagno di Calci (Pisa) (IT); Caselli, Junio, 55012 Capannori (Lucca) (IT)
(74) Representative: Ferreccio, Rinaldo

(56) References cited:
- EP-A- 0 739 957
- EP-A- 1 291 396
- WO-A-97/17409
- WO-A-97/35933
- GB-A- 2 277 094
- US-A- 5 397 387
- US-A- 5 435 840
- US-A- 5 453 122
- US-A- 5 800 601
- PATENT ABSTRACTS OF JAPAN vol. 0071, no. 39 (C-171), 17 June 1983 (1983-06-17) & JP 58 052375 A (TOYO INK SEIZO KK), 28 March 1983 (1983-03-28)

## Description

### Field of Application

The present invention relates to an ink composition practically void of toxicity, particularly suitable, even if not exclusively, for surface coloring and printing on supports, wrappings and objects which are to come into contact with foods.

The materials suitable for direct contact with foods (e.g. paper or plastic material wrappings, plastic or cardboard supports or trays, etc.) are currently colored or printed by means of inks which always have a certain degree of toxicity, more or less high. For this reason, these wrappings or supports are mandatorily coated with paraffinized papers or transparent plastic films, which perform a barrier function to prevent the migration of ink components towards the foods, although allowing to appreciate, in transparency, the underlying colorings or inscriptions.

It is clear that the presence of this additional barrier layer implies additional manufacturing costs and it can make the disposal of the used containers or wrappings complicated, due to the different chemical nature of the barrier layer with respect to that of the support whereon it is applied.

Moreover, in case the barrier layer, for any reason, is damaged even only in a small portion thereof, the ink can come into contact with the food and this can cause also serious consequences for the consumer's health.

Such an occurrence is certainly unlikely during the manufacturing step of the support or wrapping, especially if good manufacturing practices are scrupulously complied with, but it becomes likely during the using step by the final consumer. For example, the tear of the barrier layer on a picnic cardboard plate, also plastic plate, when using a knife to cut a food contained in the plate is to be considered.

It is proper to finally remind that sometimes certain colored or printed supports which are not per se to come into contact with foods (and thus not coated with a barrier layer) can however come into contact with the foods. It is the case, for example, of the paper place-mats used in self-service and fast food restaurants, whereon the consumer can involuntarily let particles of food fall. Since most consumers are not aware of the fact that the above place-mats are not "for foods" - also because of the reduced size of the appropriate warning "not for foods" - the food fallen on the place-mat is often picked up again and consumed.

Other fields wherein inks are often employed which may damage, in a more or less considerable extent, the consumer's or user's health are those of cosmetic products, of toys, of colors for painting or drawing (e.g. felt-tips) and of all those products that can come into contact with mouth, mucosae and skin.

The problem underlying the present invention has thus been that of providing an ink composition with safety characteristics from the toxicological point of view such as to be used for surface coloring and printing of objects, wrappings and supports intended for coming into contact with foods or with the consumers' skin or mucosae, without any risk of toxicity for these latter.

### Summary of the invention

Such a problem is solved, according to the invention, by an ink composition comprising at least one color suitable for food use and a liquid vehicle including water and an organic solvent miscible with water in a volumetric ratio variable from 15:1 to 1:10, wherein said organic solvent is ethanol or a mixture ethanol:acetone in a volumetric ratio variable from 1:2 to 3:1, characterized in that it further contains an antifoam agent consisting of vegetable oils or animal fats.

These antifoam agents preferably constitute 0.01%-2.0% of the total weight of the ink composition according to the invention.

The composition according to the invention can also contain one or more emulsifiers, selected in particular among those suitable for use with foods, such as, for example, lecithins, mono- and diglycerides of food fatty acids and esters thereof with lactic, citric and tartaric acids, sucroesters (E 473) and sucroglycerides (E 474).

Preferably, water and the organic solvent are in a ratio variable from 12:1 to 1:7 and said organic solvent is ethanol.

The color (or dye) contained in the ink composition according to the present invention is chosen among those allowed for food use, in particular among those for which the absolute harmlessness is universally known, such as for example, among the organic ones, curcumin, riboflavin, chlorophyll and chlorophyllins and complexes thereof with copper, carotene, lycopene, xanthophylls, lutein and betanine, and, among the inorganic ones, iron oxides and hydroxides, titanium dioxide, calcium carbonate, silver, aluminum, gold.

A non limiting list of the colors allowed for food use can be derived from the Italian Ministerial Decree of 21-12-1967 and from Italian Ministerial Decree of 27-12-1996, No. 684.

The color is contained in an amount preferably comprised between 0,1 and 30%, conveniently 1-25%, by weight on the total weight of the composition. When an organic color is used, the composition preferably contains 1 to 6% of it by weight of the total weight and the liquid vehicle preferably contains water and ethanol in a volume ratio varying from 3:1 to 1:7.

When, instead, an inorganic color is used, the composition preferably contains 7 to 25% of it by weight of the total weight and the liquid vehicle preferably contains water and ethanol in a volume ratio of 12:1 to 2:1.

Conveniently, the ink composition according to the invention also contains a non-toxic thickening agent, chosen from the group comprising cellulose ethers, in particular methylcellulose, ethylcellulose, hydroxyethylcellulose, hydroxypropylcellulose, hydroxypropylmethylcellulose and carboxymethylcellulose, cellulose esters, in particular cellulose acetate, arabic gum, shellac, polyvinylpyrrolidone, xanthane and alginates.

Preferred thickening agents are the cellulose ethers, polyvinylpyrrolidone and shellac. Methylcellulose is particularly preferred.

Preferably, the amount of the thickening agent contained in the ink composition according to the present invention is comprised between 0.1% and 20% by weight of the total weight of the composition.

A further possible component of the ink composition according to the invention is represented by tannins, preferably natural, in particular tannic acid, as fixers or however agents increasing the color fastness. When present, the tannins are contained in an amount variable from 0.1% to 10% of the total weight of the composition.

It can be useful, under certain circumstances and with particular reference to requirements of ink-jet printing, that the composition according to the invention contains agents regulating the conductivity, such as for example ammonium or alkali salts of organic acids, such as acetic, lactic and propionic acid.

The amounts of these salts in this case are generally comprised between 0.1% and 0.5% by weight on the total weight of the composition.

Finally, the ink composition according to the invention can contain an antifoam agent, for preventing the foaming of the ink during the printing step. As antifoam agent silicone compounds can be used, such as for example the DC-150 of Dow Coming, or acetylenic compounds, such as for example the antifoam agents of the SURFYNOL^{™} series of the firm Air Product and Chemical Co. (U.S.A.) or, advantageously, natural fatty substances such as vegetal oils or animal fats.

For the purpose of adjusting the pH of the ink composition of the present invention and to optimize the action of certain thickening agents it may result to be convenient adding ammonia, which also has the function of regulating conductivity, and/or borax, which also acts as a preservative, and /or calcium hydroxide.

Further preservatives that may be added to the ink composition according to the invention - although the latter is generally perfectly preserved even in the absence of specific preserving agents - are the parabens, in particular methyl- and propylparaben.

The addition of polyols such as glycerol, polyglycols and propyleneglycols, acting as drying time regulating agents, may be convenient.

Finally, according to particular application needs, further components, such as perfumes, substances conferring sweet taste (e.g. glycerol), essential oils etc. can be considered in the composition according to the invention.

The present invention will be further described by making reference to some examples regarding ink compositions for printing on paper or cardboard but it is to be underlined that the field of application of the ink composition according to the invention is not limited to this application but it extends also to the field of the cosmetics industry, of the colors for painting and drawing, including wall paintings, and others.

### EXAMPLE 1

| | |
|---|---|
| Erythrosin | 0.35 g |
| Methylcellulose | 12.0 g |
| Ethanol | 350 ml |
| Water | 50 ml |

The solution obtained by mixing the above listed components has allowed to print inscriptions and drawings practically on all the types of paper and cardboard, comprised those less porous and even those which are coated or glazed.

### EXAMPLE 2

| | |
|---|---|
| Erythrosin | 0.35 g |
| Methylcellulose | 2.7 g |
| Ethanol | 43.75 ml |
| Water | 31.25 ml |

This solution has resulted to be suitable for printing on papers and cardboards of medium-low porosity, comprised papers and cardboards which are shiny on one side.

### EXAMPLE 3

| | |
|---|---|
| Erythrosin | 0.30 g |
| Methylcellulose | 3.9 g |
| Water | 56.25 ml |
| Ethanol | 43.75 ml |

This solution is suitable for printing on papers and cardboards of medium porosity.

### EXAMPLE 4

| | |
|---|---|
| Erythrosin | 0.30 g |
| Methylcellulose | 3.15 g |
| Water | 53.12 ml |
| Ethanol | 21.88 ml |

This solution is suitable for printing on papers and cardboards of high porosity.

### EXAMPLE 5

| | |
|---|---|
| Erythrosin | 0.35 g |
| Methylcellulose | 8.0 g |
| Tannic Acid | 2.0 g |
| Ethanol | 300 ml |
| Water | 50 ml |

This solution is particularly suitable for printing on papers and cardboards of low porosity.

### EXAMPLE 6

| | |
|---|---|
| Erythrosin | 0.35 g |
| Ethanol | 44 ml |
| Water | 31 ml |

This solution has resulted to be suitable for printing on papers and cardboards of medium-low porosity, comprised papers and cardboards which are shiny on one side.

### EXAMPLE 7

| | |
|---|---|
| Erythrosin | 0.35 g |
| Methylcellulose | 8.0 g |
| Ethanol | 200 ml |
| Acetone | 100 ml |
| Water | 50 ml |

This solution is particularly suitable for printing on papers and cardboards of low porosity.

### EXAMPLE 8

| | |
|---|---|
| Red iron oxide | 19.2 g |
| Waxy shellac | 17.5 g |
| Water | 53.1 ml |
| Ethanol | 5.0 ml |
| Borax | 3.2 g |
| Lard | 0.8 g |
| Soya lecithin | 0.6 g |
| Multi-seed oil | 0.4 g |

This composition is suitable for printing on all kinds of paper and cellulose derivatives.

The ink composition according to the invention is suitable for coloring and printing objects, supports and wrappings of paper or plastic material, of fabrics or non-woven fabrics, in particular for use in relation with foods, both when they have to directly bear or contain foods (trays, tubs, plates, etc.) and when they can accidentally come into contact with foods (e.g. table-cloths and serviettes).

This because the ink components according to the invention are all non-toxic or even edible. Also if a certain amount of acetone had to be used for color stabilization reasons, the non-toxicity of the ink composition according to the invention would be guaranteed since the acetone is however a natural metabolite in the human body.

Another possible field of application of the ink composition according to the present invention, not strictly linked to the use in relation with foods but always within a context wherein adequate hygiene conditions are required, is represented by the printing on kitchen rolls paper, toilet paper an the like, such as on disposable coats and on disposable bed sheets of paper or of non-woven fabric.

The ink composition according to the invention is suitable for coloring or printing on materials of different porosity, being always possible to select a ratio between the aqueous solvent and the organic one such that it suits the particular porosity of the substrate to be colored or printed. To the same purpose it is also possible to carry out a proper selection of the thickening agent and/or of the stabilizing agent for the color and of the respective amounts contained in the composition.

As it has been pointed at above, the ink composition according to the invention is also suitable to be used in the field of cosmetics and of the colors for painting and drawing.

As regards cosmetics, the ink composition according to the present invention, thanks to its absolute non-toxicity, is effective to be used in the production of make-up, colored lipsticks or to carry out temporary tattoos, colorings for nails, etc..

In the field of the colors for painting or drawing the ink composition can be used inside felt-tips, in particular those to be used by children. In this case, a composition free of or poor in thickening agent will be used.

The ink composition according to the invention is also particularly effective for the production of watercolors and tempera. The possible presence of a suitable amount of methylcellulose or of another thickening agent inside the ink composition according to the invention contributes to give body and thickness to the brush stroke.

It is worth reminding also of the possibility of using the ink composition according to the present invention for the coloring of wood or cardboard toys, obviously subject to being brought into contact with the mouth of children.

Always as regards wood items, the ink composition according to the invention can be used for coloring chopping boards and similar wood tools used in the kitchen, such as wood trays, also thanks to the good capacity of impregnation that it has demonstrated towards the wood.

Finally, the composition according to the present invention, thanks to its absolute harmlessness and "naturalness", could be used for coloring any item, object or packaging, even if not expressly intended for being used in relation with foods, by those firms which desire to convey a message of maximum respect for the environment and for health to the potential buyers.

## Claims

1. An ink composition comprising at least one color suitable for food use and a liquid vehicle including water and an organic solvent miscible with water in a volumetric ratio variable from 15:1 to 1:10, wherein said organic solvent is ethanol or a mixture ethanol:acetone in a volumetric ratio variable from 1:2 to 3:1, **characterized in that** it further contains an antifoam agent consisting of vegetable oils or animal fats.

2. An ink composition according to claim 1, wherein said antifoam agent is contained in an amount of 0.01 to 2.0% by weight of the total weight of the composition.

3. An ink composition according to claim 1 or 2, which further includes an emulsifying agent.

4. An ink composition according to claim 3, wherein said emulsifying agent is selected among the group comprising lecithin, in particular soy lecithin, mono- and diglycerides of food fatty acids and their esters with lactic, citric and tartaric acids, sucrosters, sucroglycerides and mixtures thereof.

5. An ink composition according to any of the preceding claims, wherein water and the organic solvent are in a ratio variable from 12:1 to 1:7.

6. An ink composition according to claim 5, wherein said organic solvent is ethanol.

7. An ink composition according to any of the preceding claims, wherein said color is chosen from the group comprising erythrosin, curcumin, riboflavin, chlorophyll and chlorophyllins and complexes thereof with copper, carotene, lycopene, xanthophylls, lutein, betanine, iron oxides and hydroxides, calcium carbonate, silver, aluminum and gold.

8. An ink composition according to any of the preceding claims, wherein said color is contained in an amount comprised between 0.1% and 30% by weight of the total weight of the composition.

9. An ink composition according to clam 8, wherein said color is contained in an amount comprised between 1% and 20% by weight of the total weight of the composition.

10. An ink composition according to claim 7, wherein said color is selected among the group comprising erythrosin, curcumin, riboflavin, chlorophyll and chlorophyllins and complexes thereof with copper, carotene, lycopene, xantophylls, lutein and betanine and it is contained in a quantity of 1% to 6% by weight of the total weight of the composition.

11. An ink composition according to claim 10, wherein said liquid vehicle contains water and ethanol in a volume ratio of 3:1 to 1:7.

12. An ink composition according to claim 8, wherein said color is selected among the group comprising iron oxides and hydroxides, calcium carbonate, silver, aluminum and gold, and it is contained in an amount of 7% to 25% by weight of the total weight of the composition.

13. An ink composition according to claim 12, wherein said liquid vehicle contains water and ethanol in a volume ratio of 12:1 to 2:1.

14. An ink composition according to any of the preceding claims, further containing a non-toxic thickening agent, chosen from the group comprising cellulose ethers, cellulose esters, arabic gum, shellac, polyvinylpyrrolidone, xanthane and alginates.

15. An ink composition according to claim 14, wherein said thickening agent is chosen among methylcellulose, ethylcellulose, hydroxyethylcellulose,hydroxypropylcellulose,hydroxypropylmethylcellul ose, carboxymethylcellulose, polyvinylpyrrolidone and shellac.

16. An ink composition according to claim 14 or 15, wherein said thickening agent is contained in an amount comprised between 0.1% and 20% by weight of the total weight of the composition.

17. An ink composition according to any of the preceding claims further containing one or more tannins, natural or synthetic, as agents enhancing the color fastness.

18. An ink composition according to claim 17, wherein said tannins are contained in an amount variable from 0.1% to 10% of the total weight of the composition.

19. An ink composition according to any of the preceding claims, further containing a conductivity regulating agent, which is an ammonium or alkali salt of an organic acid.

20. An ink composition according to claim 19, wherein said organic acid is chosen among acetic, lactic and propionic acid.

21. An ink composition according to claim 19 or 20, wherein said salt is present in amounts generally comprised between 0.1% and 0.5% by weight of the total weight of the composition.

## Patentansprüche

1. Tintenzusammensetzung mit wenigstens einem Farbstoff, der sich zur Verwendung mit Lebensmitteln eignet, einer Trägerflüssigkeit einschließlich Wasser, und einem organischen Lösungsmittel, das mit Wasser in einem von 15:1 bis 1:10 veränderbaren volumetrischen Verhältnis mischbar ist, wobei das organische Lösungsmittel Ethanol oder eine Mischung aus Ethanol und Aceton in einem von 1:2 bis 3:1 veränderbaren volumetrischen Verhältnis ist, **dadurch gekennzeichnet, dass** sie darüber hinaus ein Antischaummittel enthält, das aus pflanzlichen Ölen oder tierischen Fetten besteht.

2. Tintenzusammensetzung nach Anspruch 1, wobei das Antischaummittel in einer Menge von 0,01 bis 2,0 Gew.-% des Gesamtgewichts der Zusammensetzung enthalten ist.

3. Tintenzusammensetzung nach Anspruch 1 oder 2, die darüber hinaus einen Emulgator umfasst.

4. Tintenzusammensetzung nach Anspruch 3, wobei der Emulgator aus der Gruppe ausgewählt ist, die Lecithin, insbesondere Sojalecithin, Mono- und Diglyceride von Nahrungsmittelfettsäuren und deren Ester mit Milchsäure, Zitronensäure und Weinsäure, Sucroseester, Sucroseglyceride und deren Mischungen umfasst.

5. Tintenzusammensetzung nach einem der vorhergehenden Ansprüche, wobei Wasser und das organische Lösungsmittel in einem Verhältnis vorliegen, das von 12:1 bis 1:7 veränderbar ist.

6. Tintenzusammensetzung nach Anspruch 5, wobei das organische Lösungsmittel Ethanol ist.

7. Tintenzusammensetzung nach einem der vorhergehenden Ansprüche, wobei der Farbstoff aus der Gruppe ausgewählt ist, die Erythrosin, Curcumin, Riboflavin, Chlorophyll und Chlorophylline und deren Komplexe mit Kupfer, Karotin, Lycopin, Xanthophyll, Lutein, Betanin, Eisenoxiden und -hydroxiden, Kalziumcarbonat, Silber, Aluminium und Gold umfasst.

8. Tintenzusammensetzung nach einem der vorhergehenden Ansprüche, wobei der Farbstoff in einer Menge enthalten ist, die zwischen 0,1 und 30 Gew.-% des Gesamtgewichts der Zusammensetzung liegt.

9. Tintenzusammensetzung nach Anspruch 8, wobei der Farbstoff in einer Menge enthalten ist, die zwischen 1 und 20 Gew.-% des Gesamtgewichts der Zusammensetzung liegt.

10. Tintenzusammensetzung nach Anspruch 7, wobei der Farbstoff aus der Gruppe ausgewählt ist, die Erythrosin, Curcumin, Riboflavin, Chlorophyll und Chlorophylline und deren Komplexe mit Kupfer, Karotin, Lycopin, Xanthophyll, Lutein und Betanin umfasst, und in einer Menge von 1 bis 6 Gew.-% des Gesamtgewichts der Zusammensetzung enthalten ist.

11. Tintenzusammensetzung nach Anspruch 10, wobei die Trägerflüssigkeit Wasser und Ethanol in einem Volumenverhältnis von 3:1 bis 1:7 umfasst.

12. Tintenzusammensetzung nach Anspruch 8, wobei der Farbstoff aus der Gruppe ausgewählt ist, die Eisenoxide und -hydroxide, Kalziumcarbonat, Silber, Aluminium und Gold umfasst, und in einer Menge von 7 bis 25 Gew.-% des Gesamtgewichts der Zusammensetzung enthalten ist.

13. Tintenzusammensetzung nach Anspruch 12, wobei die Trägerflüssigkeit Wasser und Ethanol in einem Volumenverhältnis von 12:1 bis 2:1 umfasst.

14. Tintenzusammensetzung nach einem der vorhergehenden Ansprüche, darüber hinaus ein ungiftiges Verdickungsmittel enthaltend, das aus der Gruppe ausgewählt ist, die Zelluloseether, Zelluloseester, Gummi arabicum, Schellack, Polyvinylpyrrolidon, Xanthan und Alginate umfasst.

15. Tintenzusammensetzung nach Anspruch 14, wobei das Verdickungsmittel aus Methylzellulose, Ethylzellulose, Hydroxyethylzellulose, Hydroxypropylzellulose, Hydroxypropylmethylcellulose, Carboxymethylcellulose, Polyvinylpyrrolidon und Schellack ausgewählt ist.

16. Tintenzusammensetzung nach Anspruch 14 oder 15, wobei das Verdickungsmittel in einer Menge enthalten ist, die zwischen 0,1 und 20 Gew.-% des Gesamtgewichts der Zusammensetzung liegt.

17. Tintenzusammensetzung nach einem der vorhergehenden Ansprüche, darüber hinaus als Mittel zur Verstärkung der Farbechtheit ein oder mehrere Tannine natürlicher oder synthetischer Herkunft umfassend.

18. Tintenzusammensetzung nach Anspruch 17, wobei die Tannine in einer Menge enthalten sind, die von 0,1 bis 10 % des Gesamtgewichts der Zusammensetzung veränderbar ist.

19. Tintenzusammensetzung nach einem der vorhergehenden Ansprüche, darüber hinaus ein die Leitfähigkeit regulierendes Mittel umfassend, das ein Ammoniumsalz oder Alkalisalz einer organischen Säure ist.

20. Tintenzusammensetzung nach Anspruch 19, wobei die organische Säure aus Essigsäure, Milchsäure und Propionsäure ausgewählt ist.

21. Tintenzusammensetzung nach Anspruch 19 oder 20, wobei das Salz in einer Menge vorhanden ist, die allgemein zwischen 0,1 und 0,5 Gew.-% des Gesamtgewichts der Zusammensetzung liegt.

## Revendications

1. Composition d'encre comprenant au moins une couleur convenant pour un usage alimentaire et un véhicule liquide contenant de l'eau et un solvant organique miscible avec l'eau en un rapport volumétrique variable de 15/1 à 1/10, dans laquelle ledit solvant organique est l'éthanol ou un mélange d'éthanol/acétone en un rapport volumétrique variable de 1/2 à 3/1, **caractérisée en ce qu'**elle contient en outre un agent anti-moussant constitué d'huiles végétales ou de graisses animales.

2. Composition d'encre selon la revendication 1, dans laquelle ledit agent anti-moussant est contenu en une quantité de 0,01 à 2,0 % en poids par rapport au poids total de la composition.

3. Composition d'encre selon la revendication 1 ou 2, qui contient en outre un agent émulsionnant.

4. Composition d'encre selon la revendication 3, dans laquelle ledit agent émulsionnant est choisi dans le groupe constitué par la lécithine, en particulier la lécithine de soja, les mono- et di-glycérides d'acides gras alimentaires et leurs esters avec les acides lactique, citrique et tartrique, les esters de sucre, les glycérides de sucre et leurs mélanges.

5. Composition d'encre selon l'une quelconque des revendications précédentes, dans laquelle l'eau et le solvant organique sont présents en un rapport variable de 12/1 à 1/7.

6. Composition d'encre selon la revendication 5, dans laquelle ledit solvant organique est l'éthanol.

7. Composition d'encre selon l'une quelconque des revendications précédentes, dans laquelle ladite couleur est choisie dans le groupe constitué par l'érythrosine, la curcumine, la riboflavine, la chlorophylle et les chlorophyllines et leurs complexes avec le cuivre, le carotène, le lycopène, les xanthophylles, la lutéine, la bétanine, les oxydes et hydroxydes de fer, le carbonate de calcium, l'argent, l'aluminium et l'or.

8. Composition d'encre selon l'une quelconque des revendications précédentes, dans laquelle ladite couleur est contenue en une quantité comprise entre 0,1 % et 30 % en poids du poids total de la composition.

9. Composition d'encre selon la revendication 8, dans laquelle ladite couleur est contenue en une quantité comprise entre 1 % et 20 % en poids par rapport au poids total de la composition.

10. Composition d'encre selon la revendication 7, dans laquelle ladite couleur est choisie dans le groupe constitué par l'érythrosine, la curcumine, la riboflavine, la chlorophylle et les chlorophyllines et leurs complexes avec le cuivre, le carotène, le lycopène, les xanthophylles, la lutéine et la bétanine, et est contenue en une quantité comprise entre 1 % et 6 % en poids par rapport au poids total de la composition.

11. Composition d'encre selon la revendication 10, dans laquelle ledit véhicule liquide contient de l'eau et de l'éthanol en un rapport en volume de 3/1 à 1/7.

12. Composition d'encre selon la revendication 8, dans laquelle ladite couleur est choisie dans le groupe constitué par les oxydes et hydroxydes de fer, le carbonate de calcium, l'argent, l'aluminium et l'or, et est contenue en une quantité de 7 % à 25 % en poids par rapport au poids total de la composition.

13. Composition d'encre selon la revendication 12, dans laquelle ledit véhicule liquide contient de l'eau et de l'éthanol en un rapport en volume de 12/1 à 2/1.

14. Composition d'encre selon l'une quelconque des revendications précédentes, contenant en outre un agent épaississant non toxique, choisi dans le groupe constitué par les éthers de cellulose, les esters de cellulose, la gomme arabique, la gomme laque, la polyvinylpyrrolidone, le xanthane et les alginates.

15. Composition d'encre selon la revendication 14, dans laquelle ledit agent épaississant est choisi parmi la méthylcellulose, l'éthylcellulose, l'hydroxyéthylcellulose, l'hydroxypropylcellulose, l'hydroxypropylméthylcellulose, la carboxyméthylcellulose, la polyvinylpyrrolidone et la gomme laque.

16. Composition d'encre selon la revendication 14 ou 15, dans laquelle ledit agent épaississant est contenu en une quantité comprise entre 0,1 % et 20 % en poids par rapport au poids total de la composition.

17. Composition d'encre selon l'une quelconque des revendications précédentes, contenant en outre un ou plusieurs tannins, naturels ou synthétiques, servant d'agents amplifiant la ténacité de la couleur.

18. Composition d'encre selon la revendication 17, dans laquelle lesdits tannins sont contenus en une quantité variant de 0,1 % à 10 % par rapport au poids total de la composition.

19. Composition d'encre selon l'une quelconque des revendications précédentes, contenant en outre un agent régulateur de conductivité, qui est un sel d'ammonium ou alcalin d'un acide organique.

20. Composition d'encre selon la revendication 19, dans laquelle ledit acide organique est choisi parmi les acides acétique, lactique et propionique.

21. Composition d'encre selon la revendication 19 ou 20, dans laquelle ledit sel est présent en des quantités généralement comprises entre 0,1 % et 0,5 % en poids par rapport au poids total de la composition.
